(19) Europäisches Patentamt

European Patent Office

Office européen des brevets

(11) Veröffentlichungsnummer: **0 463 161 A1**

(12) **EUROPÄISCHE PATENTANMELDUNG**
veröffentlicht nach Art. 158 Abs. 3
EPÜ

(21) Anmeldenummer: 89907372.0

(22) Anmeldetag: 24.03.89

(86) Internationale Anmeldenummer:
**PCT/SU89/00074**

(87) Internationale Veröffentlichungsnummer:
**WO 90/11261 (04.10.90 90/23)**

(51) Int. Cl.⁵: **C04B 35/58**

(43) Veröffentlichungstag der Anmeldung:
**02.01.92 Patentblatt 92/01**

(84) Benannte Vertragsstaaten:
**AT CH DE FR GB IT LI NL SE**

(71) Anmelder: **INSTITUT STRUKTURNOI
MAKROKINETIKI AKADEMII NAUK SSSR
Moskovskaya oblast
Poselok Chernogolovka 142432(SU)**

(72) Erfinder: **MERZHANOV, Alexandr Grigorievich
ul. Tretya, 3-2 Moskovskaya obl.
pos. Chernogolovka, 142432(SU)**
Erfinder: **BOROVINSKAYA, Inna Petrovna ul.
Tretya, 3-2
Moskovskaya obl.
pos. Chernogolovka, 142432(SU)**

Erfinder: **LORIAN, Vazgen Edvardovich ul.
Pervaya, 9-21
Moskovskaya obl.
pos. Chernogolovka, 142432(SU)**
Erfinder: **BLINOV, Mikhail Jurievich Shkolny
bulvar, 1b-25b
Moskovskaya obl.
pos. Chernogolovka, 142432(SU)**
Erfinder: **MUKASIAN, Alexandr Sergeevich
Shkolny bulvar, 1b-97 Moskovskaya obl.
pos. Chernogolovka, 142432(SU)**

(74) Vertreter: **Hansen, Bernd, Dr. Dipl.-Chem. et al
Hoffmann, Eitle & Partner Patent- und
Rechtsanwälte Arabellastrasse 4 Postfach
81 04 20
W-8000 München 81(DE)**

(54) VERFAHREN ZUR HERSTELLUNG KERAMISCHER ERZEUGNISSE.

㊼ Das Verfahren bezieht sich auf die Herstellungstechnologie für die Erzeugnisse aus hochschmelzenden Verbindungen.

Das Wesen des Verfahrens besteht darin, daß ein pulverförmiges Gemenge aufbereitet wird, welches mindestens eine Komponente aus der Reihe der Metalle der III. bis VIII. Gruppe des Periodischen Systems der Elemente, Bor, Silizium und Kohlenstoff sowie mindestens eine Verbindung aus der Reihe der Boride und Silizide der Übergangsmetalle der IVa. bis VIa. Gruppe des Periodischen Systems der Elemente enthält, dann aus dem Gemenge ein Roherzeugnis geformt wird, das bei einer Temperatur von 2000 bis 3000°C in der Atmosphäre eines stickstoffhaltigen Gases unter einem Druck von 0,1 bis 1000 MPa mit Flammenführung wärmebehandelt wird.

Gebiet der Technik

Die vorliegende Erfindung bezieht sich auf die Herstellungstechnologie für Erzeugnisse aus hochschmelzenden Verbindungen und betrifft insbesondere ein Verfahren zur Herstellung keramischer Erzeugnisse auf der Basis hochschmelzender Nitride.

Zugrundeliegender Stand der Technik

Gegenwärtig werden keramische Erzeugnisse nach allen herkömmlichen Verfahren in zwei Stufen hergestellt: zunächst werden Pulver hitzebeständiger Verbindungen und dann keramische Erzeugnisse aus diesen Pulvern hergestellt.

Das Hauptverfahren zur Herstellung hochschmelzender Nitride in Pulverform ist die Ofensynthese. Dabei wird das Pulvergemisch eines Metalls (bzw. seiner Verbindungen) in einem Ofen im Laufe mehrerer Stunden bei Hochtemperaturen in der stickstoffhaltigen Atmosphäre zur Umsetzung des Metalls mit dem Stickstoff geglüht. Zur Verhinderung einer Wärmeexplosion während der Nitrierungsreaktion werden verschiedene Maßnahmen, wie Wärmeableitung, Verdünnen mit Endprodukt u.a. getroffen. Außerdem bedarf die Ofensynthese der pulverförmigen Nitride einer kostspieligen Ausrüstung, und sie ist mit einem großen Zeit- und Elektroenergieaufwand verbunden.

Die gewonnenen pulverförmigen Nitride werden zur Herstellung von Erzeugnissen (als Ausgangsprodukte) in herkömmlichen technologischen Prozessen der Pulvermetallurgie verwendet. Zu diesen Prozessen zählen Sintern, Warmpressen, isostatisches Warmpressen, Sintern unter hohen statischen Druckwerten, Reaktionssintern.

Die aus dem Pulvernitrid vorgepreßten Roherzeugnisse werden in der Stickstoffatmosphäre, in der Atmosphäre stickstoffhaltiger Reduktionsgase oder im Vakuum gesintert. So werden beispielsweise beim Sintern der Roherzeugnisse aus Titannitrid im Vakuum bei 2200ºC während 4 Stunden Erzeugnisse mit einer Porosität von 22 % hergestellt, wobei ein bestimmter Massenschwund zustandekommt. Deshalb werden Sinterverhältnisse mit niedrigeren Temperaturen in der Stickstoffatmosphäre bei Druckwerten bis zu 1 atm bevorzugt. Bei der Herstellung von Erzeugnissen aus nichtmetallischen Nitride beispielsweise aus Siliziumnitrid wird zur Verhinderung einer Dessoziation der Nitride und einer Zerstörung der Roherzeugnisse eine Reaktionsschüttung aus dem gleichen Nitrid verwendet, jedoch können sogar bei diesen Verhältnissen dichte und feste Erzeugnisse durch das einfache Sitern in der Stickstoffatmosphäre nicht hergestellt werden.

Beim Warmpressen werden die aus Pulvernitriden vorgeformten Roherzeugnisse in Graphitpreßformen bei Temperaturen von höchstens 2000ºC unter einen Druck von 20 bis 30 MPa in der stickstoffhaltigen oder einer neutralen (Argon) Schutzatmosphäre gepreßt. Die Erzeugnisse haben eine minimale Restporösität von 2 bis 4 %, und grundsätzlich genügt das Warmpreßverfahren den Anforderungen, die an die herzustellenden Erzeugnisse gestellt werden. Jedoch ist bei diesem Verfahren eine Verschmutzung der Preßteile mit dem Werkstoff der Preßform (Kohlenstoff) sowie ein häufiger Ausfall der Graphitpreßformen unvermeidlich, die Leistung ist gering und der Energieverbrauch ist groß, die Herstellung von Erzeugnissen komplizierter Konfiguration ist unmöglich, und die Erzeugnisse mit einer einfachen geometrischen Form erfordern eine zusätzliche mechanische Bearbeitung. Infolge einer hohen Härte der Nitridkeramik kann diese Bearbeitung nur mit Diamantwerkzeug durchgeführt werden, was eine wesentliche Verteuerung der Produkte zur Folge hat, weil die Bearbeitungskosten bis zu 50 % der Fertigproduktkosten betragen können.

Das isostatische Warmpressen besteht darin, daß der Ausgangspulvernitrid in eine gasundurchlässige Hülle eingeschlossen wird, die die Form des herzustellenden Erzeugnisses wiederholt, die Hülle verschweißt und denn in eine Gasdruckkammer eingebracht wird, wo das isostatische Pressen des Roherzeugnisses bei Temperaturen bis zu 2000ºC und einem Gasdruck (Stickstoff, Argon) bis zu 200 MPa durchgeführt wird. Die Nachteile des Verfahrens sind eine komplizierte Entwicklung der gasundurchlässigen Hüllen sowie kostspielige Ausrüstung (Hochdruckgaskammern).

Das Sintern von Erzeugnissen aus hochschmelzenden Nitriden bei hohen statischen Druckwerten, die Dutzende von Kilobar erreichen können, hat keine große Verbreitung gefunden, weil die Erzeugung solcher Druckwerte in einen genügend großen Raumumfang unmöglich ist.

Das Reaktionssintern besteht in einer gleichzeitigen Bildung eines Nitrides und dessen Sinterung. Das Roherzeugnis wird aus den Elementen der III. bis VIII. Gruppe des Periodischen Systems der Elemente und ihrer Verbindungen geformt und in Öfen bei Hochtemperaturen in der Stickstoffatmosphäre während mehrerer Stunden gesintert. Das Verfahren gestattet es, Erzeugnisse einer komplizierten Konfiguration herzustellen, die keine zusätzliche Bearbeitung erfordern, jedoch eine hohe Restporösität (über 20 %) aufweisen. Zur Herstellung von dichteren Erzeugnissen werden sie durch Warmpressen zusätzlich bearbeitet, wodurch der Prozeß wesentlich komplizierter wird. Bei der Durchführung dieses Verfahrens sind ebenfalls kostspielige Elektroöfen erforderlich. wodurch die Energieverbrauch wesentlich vergrößert wird.

Es ist zu bemerken, daß durch die Kombination der Verfahren zur Reaktionssintern und Sintern unter gleichzeitigem Einsatz aktivierender Oxidzusätze Erzeugnisse mit einer Porosität bis zu 5 % hergestellt werden können, und beim zusätzlichen Warmpressen die Porosität vollständig verschwindet, jedoch bleiben die den genannten Verfahren eigenen Nachteile erhalten.

Somit sind beim gegenwärtigen Stand der Technik die Möglichkeiten der herkömmlichen pulvermetallurgischen Technologien bei der Herstellung keramischer Erzeugnisse aus hochschmelzenden Nitriden praktisch erschöpft.

Es ist ein Verfahren zur Herstellung keramischer Erzeugnisse auf der Basis hochschmelzender Nitride bekannt, das nach seinen Charakteristiken dem Verfahren zur Reaktionssintern am nächsten kommt.

Gemäß diesem Verfahren wird ein pulverförmiges Gemenge aufbereitet, das mindestens eine pulverförmige Komponente enthält, die aus einer Gruppe ausgewählt wird, die aus Metallen der III. bis VIII. Gruppe des Periodischen Systems der Elemente sowie aus Nichtmetallen, wie Bor, Silizium und Kohlenstoff besteht, aus dem Gemenge ein Roherzeugnis geformt und das Roherzeugnis in der stickstoffhaltigen Gasatmosphäre unter Druck (US, A, 3726643) mit Flammenführung wärmebehandelt.

Dabei wird das Roherzeugnis geformt, bis die absolute Dichte von 2 bis 4 g/cm$^2$ erreicht ist. Dann wird das vorgepreßte Roherzeugnis in ein Reaktionsgefäß eingebracht, das mit Zuführ- und Auslaßventilen für das stickstoffhaltige Gas und mit Elektroanschlüssen versehen ist. Zur Entflammung des Ausgangsroherzeugnisses können verschiedene Elemente wie elektrische Wandeln, Drähte, Platten usw. aus Wolfram, Molybdän oder Nichrom eingesetzt werden, durch die eine für die Initiierung des Brennvorgangs ausreichende Temperatur entwickelt wird.

Die Wärmebehandlung mit Flammenführung wird bei einem Gasdruck von 0.05 bis 100 MPa durchgeführt.

Bei der Bildung der Silizium-, Titan-, Aluminium- und einer Reihe anderer Nitride werden während des Brennvorgangs höhere Temperaturen als die Schmelztemperatur der Gemengekomponenten des Ausgangsroherzeugnisses u.zw. des Siliziums, Titans, Aluminiums und der anderen, entwickelt. Dabei schmelzen die Poren ein, der Stickstoffzutritt zu den Ausgangskomponenten wird unterbrochen, im Ergebnis wird der Werkstoff unternitriert, was sich auf die Qualität der keramischen Erzeugnisse negativ auswirkt.

Die eingesetzten Gemische der Ausgangskomponenten werden mittels einer Wendel über ein Zündgemisch entflammt, das $CaSi_2$, $Fe_2O_3$, Mg, $Al_2O_3$, $SiO_2$, Ti, B (mit Ausnahme des Verfahrens zur Herstellung von Zirkoniumnitrid, bei dem das Gemisch unmittelbar durch eine Wendel entflammt wird) einschließt. Das verwendete Zündgemisch hat einen starken exothermen Effekt, wodurch ein Schmelzen und Bersten der Oberfläche des aus dem Ausgangsgemenge geformten Roherzeugnisses hervorgerufen wird. Im Ergebnis entstehen an der Oberfläche des hergestellten Erzeugnisses Fehler, durch die die Qualität des Erzeugnisses verschlechtert wird.

Der Hauptfaktor, durch den die physikalisch-mechanischen Kenndaten der herzustellenden Erzeugnisses beeinflußt werden, ist deren Porosität. Bei der Gewinnung von Nitriden hängt die Porosität vom Umwandlungsgrad der Ausgangskomponenten zu Nitriden (von der Nitridausbeute) in der Brennwelle ab. Um den Umwandlungsgrad (Nitridausbeute) zu erhöhen, wird die Wärmebehandlung im bekannten Verfahren bei einem Druck des stickstoffhaltigen Gases von 0,05 bis 100 MPa durchgeführt. Die Zufuhrgeschwindigkeit des stickstoffhaltigen Gases an die Gemengekomponenten des Ausgangsroherzeugnisses wird durch den Druckwert (Druckgefälle) bestimmt. Jedoch kann beim oberen Druckgrenzwert ein vollkommener Reaktionsablauf des Gemenges für das Ausgangsroherzeugnis mit dem stickstoffhaltigen Gas nicht in allen Fällen gewährleistet werden. Das kommt dann besonders stark zum Ausdruck, wenn zwecks Herstellung von dichteren Erzeugnissen die relative Dichte des Roherzeugnisses (0,65 bis 0,75) vergrößert wird.

Um die Nitridausbeute zu erhöhen, werden die Komponenten des Ausgangsgemenges mit Ammoniumchloriden (in einer Menge von 0,5 bis 10 Masseprozent) oder mit Zinkchloriden (in einer Menge von 0,5 bis 10 Masseprozent) vermischt. Die genannten Verbindungen wirken auf das vorgeformten Roherzeugnis aufflockernd, wobei die Ausbeute an Nitriden erhöht, jedoch gleichzeitig die Porosität des herzustellenden Erzeugnisses vergrößert wird, wodurch seine physikalisch-mechanischen Eigenschaften beeinträchtigt werden.

Fertigerzeugnisse werden auch ohne Pressen des Roherzeugnisses hergestellt, wobei das Ausgangsgemenge in speziell gebaute Formen aufgegeben wird. Durch dieses Verfahren können jedoch Erzeugnisse mit einem kleinen Porengehalt und hohen physikalisch-mechanischen Eigenschaften nicht hergestellt werden, weil die Ausgangsroherzeugnisse eine hohe Porosität aufweisen, die durch die Schüttdichte des Pulvers bedingt ist. Nach der Wärmebehandlung mit Flammenführung wird das hergestellte Erzeugnis unter dem obenangegebenen Druck des stickstoffhaltigen Gases abgekühlt. Die Anwendbarkeit dieses kühlverfahrens hängt von der chemischen Zusammensetzung des Werkstoffs und seiner Porosität ab. Durch die Erhöhung des Gasdrucks wird die Gasschwindigkeit der konvektiven Wärmeableitung von der Erzeugnisoberfläche vergrößert. Das führt zu Wärmespannungen im Erzeugnis und zu seiner Zerstörung. Somit hat das dargelegte Verfahren folgende Nachteile:

- eine niedrige Qualität der Erzeugnisse infolge ihrer hohen Porosität (20 bis 40 %);
- eine inhomogene chemische Zusammensetzung des Werkstoffs der herzustellenden Erzeugnisse infolge des Schmelzens und eines ungleichmäßigen Nitrierens auf dem Querschnitt des Roherzeugnisses und folglich des Erzeugnisses;
- Unmöglichkeit, keramische Erzeugnisse einer komplizierten Konfiguration infolge ihrer Zerstörung durch Wärmespannungen herzustellen.

Offenbarung der Erfindung

Der vorliegenden Erfindung liegt die Aufgabe zugrunde, ein Verfahren zur Herstellung keramischer Erzeugnisse auf der Basis hochschmelzender Nitride zu schaffen, welches durch die Einführung einer zusätzlichen Komponente ins Gemenge und durch eine bestimmte Art der Wärmebehandlung des Roherzeugnisses es ermöglicht, Erzeugnisse vorgegebener Form und Abmessungen mit einer niedrigen Porosität und einer gleichmäßigen Nitrierung auf dem Erzeugnisquerschnitt herzustellen.

Das Wesen des Verfahrens besteht darin, daß in einem Verfahren zur Herstellung keramischer Erzeugnisse auf der Basis hochschmelzender Nitride, welches die Herstellung eines pulverförmigen Gemenges, das mindestens eine Komponente enthält, die aus einer Gruppe ausgewählt wird, die aus Metallen der III. bis VIII. Gruppe des Periodischen Systems der Elemente, Bor, Silizium und Kohlenstoff besteht, das Formen eines Roherzeugnisses aus dem Gemenge und seine Wärmebehandlung mit Flammenführung in der Atmosphäre eines stickstoffhaltigen Gases unter Druck einschließt, erfindungsgemäß in das Gemenge mindestens eine Verbindung aus der Reihe der Boride und Silizide der Übergangsmetalle der IVa. bis VIa. Gruppe des Periodischen Systems der Elemente und/oder der Werkstoff des herzustellenden Erzeugnisses eingeführt und die Wärmebehandlung unter der Temperaturregelung während der Behandlung von ca. 2000 bis ca. 3000°C und bei einem Druck des stickstoffhaltigen Gases von ca. 0,1 bis ca. 1000 MPa durchgeführt wird.

Dem erfindungsgemäßen Verfahren liegt die Gedanke zugrunde, Boride und Silizide der Übergangsmetalle der IVa. bis VIa. Gruppe des Periodischen Systems der Elemente oder den Werkstoff des herzustellenden Erzeugnisses einzusetzen, um die Porosität zu reduzieren sowie die Homogenität und den Nitrierungsgrad zu erhöhen. Die Porosität verringert sich bei der Wechselwirkung der Boride und Silizide mit der stickstoffhaltigen Atmosphäre in einer Brennwelle. Dabei bilden sich Nitride des entsprechenden Metalls, Bors und Siliziums.

Außerdem wird durch die ins Gemenge zusätzlich eingeführten Silizide und Boride die Bildung von festen Bindungen zwischen den Körnern des Erzeugniswerkstoffs infolge des Entstehung eines Übergangsgebiets an den Korngrenzen gefördert, wodurch die Festigkeit des herzustellenden Erzeugnisses erhöht wird.

Durch die zusätzliche Einführung der Boride und Silizide wird die Homogenität des Werkstoffs des herzustellenden Erzeugnisses verbessert, weil diese Verbindungen Bor und Silizium darstellen, die mit den Metallen auf der atomaren Ebene "vermischt" sind. Bei der Wechselwirkung mit der stickstoffhaltiger Atmosphäre bilden sich an Stelle der Boride und Silizide gleichmäßig verteilte Bor-, Silizium- und Metallnitride.

Außerdem wird durch die ins Gemenge zusätzlich eingeführten Komponenten der Nitrierungsgrad des Ausgangsgemenges für das Roherzeugnis erhöht, wodurch ihrerseits die Porosität des Erzeugnisses reduziert wird und seine physikalisch-mechanischen Eigenschaften verbessert werden.

Bei Brenntemperaturen über 3000°C verschmelzen sich die pulverförmigen Reaktionskomponenten, der Zutritt der gasförmigen Komponente in die Reaktionszone wird unterbrochen und als Folge reagiert das Ausgangsgemenge nicht vollständig, und die Erzeugnisse haben eine verschlechterte Qualität. Durch die Temperaturregelung in einem Bereich von ca. 2000 bis ca. 3000°C kann der Umwandlungsgrad des Ausgangsgemenges zum Werkstoff des herzustellenden Erzeugnisses in der Brennwelle geregelt werden, und dadurch werden Erzeugnisse einer höheren Qualität hergestellt. Bei Temperaturen unterhalb 2000°C verläuft der Brennvorgang nicht gleichförmig, wodurch die Erzeugnisqualität verschlechtert wird.

Durch die Auswahl der Druckwerte des stickstoffhaltigen Gases in einem Bereich von ca. 0,1 bis ca. 1000 MPa kann die Stickstoffmenge in den Poren des Roherzeugnisses vor dem Durchlauf der Brennwelle geregelt sowie diese oder jene Verhältnisse der Stickstoffinfiltration in die Reaktionszone während des Durchlaufs der Brennwelle geschaffen werden. Dadurch wird es möglich, den Brennvorgang zu steuern, was

4

die Technologie vereinfacht. Außerdem können während des Brennvorgangs Temperaturen entwickelt werden, die die Dissoziationstemperatur des Werkstoffs des herzustellenden Erzeugnisses überschreiten, und deswegen dient der Stickstoffdruck als Instrument zur Unterdrückung der Dissoziation und folglich zur Steigerung der Erzeugnisqualität.

Zweckmäßigerweise wird bei der Herstellung von Erzeugnissen nach dem erfindungsgemäßen Verfahren ins Ausgangsgemenge für das Roherzeugnis ein Gemisch zusätzlich eingeführt, das Siliziumkarbid und Borid und/oder Silizid eines Metalls der IVa. bis VIa. Gruppe des Periodischen Systems der Elemente enthält, wobei der Siliziumkarbidgehalt im Gemisch von ca. 20 bis ca. 95 Masseprozent beträgt. Durch die Boride im Gemisch mit Siliziumkarbid wird die Wärmebeständigkeit und durch die Silizide im Gemisch mit Siliziumkarbid wird die Hochtemperaturfestigkeit erhöht. Die Eigenschaften werden verbessert, indem die Porosität während der Nitrierung und der Dispersionsverfestigung der Matrix aus den Nitriden der Nichtmetalle (B und Si) durch die Nitride der Metalle der IVa. bis VIa. Gruppe des Periodischen Systems der Elemente reduziert wird. Außerdem wird durch die Einführung des Siliziumskarbide die Homogenität des herzustellenden Erzeugnisses erhöht, weil eine Verschmelzung der leichtschmelzenden Gemengekomponenten des Ausgangsroherzeugnisses verhindert wird. Bei der Einführung des Siliziumkarbids und Gemisch in einer Menge von unter 20 Masseprozent wird die Verschmelzung der leichtschmelzenden Gemengekomponenten nicht wirksam genug verhindert. Bei einem Siliziumkarbidgehalt über 95 Masseprozent scheidet sich der freie Kohlenstoff aus, durch den die physikalisch-mechanischen Eigenschaften des Erzeugnisses beeinträchtigt werden.

Zweckmäßigerweise wird bei der Durchführung des erfindungsgemäßen Verfahrens und Ausgangsgemenge mindestens eine Komponente aus der Reihe der Oxide der Elemente der II. bis IV. Gruppe des Periodischen Systems der Elemente bei einem Gesamtoxidgehalt von ca. 0,5 bis ca. 50 Masseprozent zusätzlich eingeführt. Die genannten Oxide tragen dazu bei, daß der Werkstoff besser gesintert und somit die Porosität reduziert und die physikalisch-mechanischen Kenndaten des Erzeugnisses verbessert werden. Das Sintern wird durch die Bildung von Oxidschmelzen und Sialonphasen an den Korngrenzen verbessert. Bei einem Gehalt der genannten Oxide unter 0,5 Masseprozent wird das Sintern infolge einer geringen Oxidmenge nicht verbessert.

Bei einem Oxidgehalt im Gemisch über 50 Masseprozent haben die Erzeugnisse eine auf dem Querschnitt unhomogene Zusammensetzung infolge Verschmelzung und Unterbrechung der Stickstoffzuführ in die Brennwelle während der Wärmebehandlung.

Bei der Herstellung des Erzeugnisses ist es zweckmäßig, das vorgeformte Roherzeugnis vor der Wärmebehandlung in ein Pulvergemisch, das einen chemisch inerten hochschmelzenden Werkstoff enthält, und/oder in ein Reaktionsgemisch einzulegen und die Wärmebehandlung durch die Initiierung eines Brennens des Roherzeugnisses oder des Reaktionsgemisches durchzuführen. Das ist für eine gleichmäßige Durchwärmung des Roherzeugnisses während der Wärmebehandlung und die Abkühlung des Erzeugnisses nach dem Durchlauf der Brennwelle erforderlich. Dadurch werden ebenfalls Bedingungen (in Kombination mit Hochdruckwerten) für eine zusätzliche Sinterung nach dem Durchlauf der Brennwelle geschaffen, und auf diese Weise wird die Porosität des Erzeugnisses reduziert.

Bei der Wärmebehandlung unter einem Druck des stickstoffhaltigen Gases in einem Bereich von ca. 50 bis ca. 1000 MPa ist es zweckmäßig, die Abkühlgeschwindigkeit des Erzeugnisses durch die Druckreduzierung auf ca. 7 bis 15 MPa zuregeln. Dadurch wird ein Bersten des Erzeugnisses infolge der Wärmespannungen während der Abkühlung vermieden. Durch die Druckentlastung auf einen Wert von über 15 MPa wird ein Bersten des Erzeugnisses infolge der Wärmespannungen nicht verhindert. Bei der Druckentlastung unter 7 MPa kann der Erzeugniswerkstoff durch die Komponenten der Luftatmosphäre verunreinigt werden sowie eine teilweise Dissoziation der Nitride, d.h., eine Auflockerung des Erzeugniswerkstoffs zustandekommen.

Vor der Wärmebehandlung mit Flammenführung ist es in einigen Fällen (beispielsweise, wenn es schwierig ist, ein Pulvergemisch zusammenzustellen, das gegenüber dem darin einzulegenden Roherzeugnis neutral ist, oder, wenn durch die Druckreduzierung auf 7 bis 15 MPa eine Zerstörung des Erzeugnisses infolge der Wärmespannungen nicht verhindert wird) zweckmäßig, das vorgeformte Roherzeugnis mittels einer externen Wärmequelle (beispielsweise mit einen Widerstandsheizkörper) auf eine Temperatur unterhalb der kritischen Temperatur der Wärmeexplosion des Gemenges für das Roherzeugnis vorzuwärmen. Dadurch wird die Abführung der Wärme für die Durchwärmung des Roherzeugnisses aus der Brennzone verringert und folglich der Verlauf des Brennvorgangs erleichtert und die Porosität des herzustellenden Erzeugnisses infolge eines höheren Nitrierungsgrades während der Wärmebehandlung reduziert.

Bei der Vorwärmung des Roherzeugnisses oberhalb der kritischen Temperatur kommt eine Wärmeexplosion zustande, d.h., das Roherzeugnis tritt mit der stickstoffhaltigen Atmosphäre gleich im gesamten Volumen in Wechselwirkung und wird zerstört.

Bei der Durchführung des obengenannten Verfahrens ist es zweckmäßig, die Abkühlung nach dem Durchlauf der Brennwelle durch eine Änderung der Temperatur der externen Wärmequelle zu regeln. Dadurch werden Wärmespannungen im Fertigteil beseitigt sowie sein Bersten und seine Zerstörung verhindert.

Nach der Wärmebehandlung mit Flammenführung bis das Erzeugnis sich noch im Warmzustand befindet, ist es zweckmäßig, seine zusätzliche Verdichtung durch Pressen durchzuführen. Dadurch wird die Endporosität des Erzeugnisses reduziert, wodurch ihrerseits die physikalisch-mechanischen Kenndaten des Erzeugnisses verbessert werden.

Beste Ausführungsvariante der Erfindung

Nachstehend wird die vorliegende Erfindung an Hand konkreter Durchführungsbeispiele erläutert.

Das erfindungsgemäße Verfahren zur Herstellung keramischer Erzeugnisse auf der Basis hochschmelzender Nitride wird folgenderweise durchgeführt.

Aus pulverförmigen Komponenten, die aus einer Gruppe ausgewählt werden, die aus Metallen der III. bis VIII. Gruppe des Periodischen Systems der Elemente sowie aus Nichtmetallen wie Bor, Silizium und Kohlenstoff besteht, wird ein Gemenge durch die Vermischung der genannten Komponenten in Kugelmühlen oder auf eine andere bekannte Weise aufbereitet.

Erfindungsgemäß wird in das Gemenge mindestens eine Verbindung aus der Reihe der Boride und Silizide der Übergangsmetalle der IVa. bis VIa. Gruppe des Periodischen Systems der Elemente (Beispielsweise $TiB_2$, $NbB_2$, $Ti_5Si_3$, $MoSi_2$ und andere) und/oder der Werkstoff des herzustellenden Erzeugnisses (beispielsweise ein Pulvergemisch aus Titannitrid mit Bornitrid oder aus Titannitrid mit Siliziumnitrid u.a.) zusätzlich eingeführt.

Aus dem gewonnenen Ausgangsgemenge wird ein Roherzeugnis geformt. Das Formen kann auf eine beliebige bekannte Weise beispielsweise durch Pressen in Stahlpreßformen, Schlickerguß, hydrostatisches Pressen durchgeführt werden. Dann wird das Roherzeugnis in ein Reaktionsgemäß eingebracht und in der stickstoffhaltigen Gasatmosphäre unter Druck mit Flammenführung wärmebehandelt. Dabei wird die Wärmebehandlung durchgeführt, indem die Temperatur von ca. 2000 bis ca. 3000ºC und der Druck der sickstoffhaltigen Atmosphäre von ca. 0,1 bis ca. 1000 MPa während der Behandlung geregelt wird. Die Wärmebehandlung des Roherzeugnisses (die Synthese) dauert von einigen Sekunden bis zu einigen Minuten.

Nach dem Durchlauf der Brennwelle wartet man ab, bis das hergestellte Erzeugnis vollständig abkühlt, das Reaktionsgefäß wird vom Druck entlastet und das Erzeugnis wird herausgenommen.

Durch den Einsatz der Boride und Silizide der Übergangsmetalle der IVa. bis VIa. Gruppe des Periodischen Systems der Elemente und des Werkstoffs des herzustellenden Erzeugnisses wird die Porosität reduziert und die Nitrierungsgleichmäßigkeit auf dem Querschnitt des Roherzeugnisses erhöht, weil die zusätzlich eingeführten Komponenten mit der stickstoffhaltigen Atmosphäre unter Bildung der Nitride des Bors, Siliziums und der entsprechenden Metalle der IVa. bis VIa. Gruppe in Wechselwirkung treten und zu einer besseren Sinterung der Werkstoffkörner beitragen.

Die Temperaturregelung in einem Bereich von 2000 bis 3000ºC gestattet es den Umwandlungsgrad des Ausgangsgemenges zu Erzeugniswerkstoff in einer Brennwelle zu regeln und dichte Erzeugnisse mit einem auf dem Querschnitt gleichmäßigen Nitrierungsgrad des Roherzeugnisses herzustellen.

Durch den Druck in einem Bereich von ca. 0,1 bis ca. 1000 MPa wird der Stickstoffgehalt in den Poren des Roherzeugnisses geregelt. Dadurch wird die Möglichkeit geschaffen, den Brennvorgang zu steuern, wodurch die Technologie vereinfacht und die Erzeugnisqualität (geringe Porosität und höhere Nitrierungsgleichmäßigkeit auf dem Erzeugnisquerschnitt) verbessert.

Um die Wärmebeständigkeit und die Hochtemperaturfestigkeit sowie die Homogenität des herzustellenden Erzeugnisses zu erhöhen, wird ins Ausgangsgemenge für das Roherzeugnis ein Gemisch zusätzlich eingeführt, das Siliziumkaroid und Borid und/oder Silizid der Metalle der IVa. bis VIa. Gruppe des Periodischen Systems der Elemente (beispielsweise $TiB_2$ und andere) bei einem Siliziumkarbidgehalt im Gemisch von ca. 20 bis ca. 95 Masseprozent enthält, weil durch die genannten Boride und Silizide die Erzeugnisporosität vermindert und durch das Siliziumkarbid eine Verschmelzung der leichtschmelzenden Komponenten des Gemenges für das Ausgangsroherzeugnis (wie Si, Al und andere) verhindert wird.

Zu einem besseren Sintern des Erzeugniswerkstoffs und entsprechend zur Reduzierung der Porösität wird ins Ausgangsgemenge für das Roherzeugnis mindestens eine Komponente aus der Reihe der Oxide der Elemente der II. bis IV. Gruppe des Periodischen Systems der Elemente eingeführt, wobei der Gesamtoxidgehalt von 0,5 bis 50 Masseprozent beträgt.

Zu einer gleichmäßigen Durchwärmung des Roherzeugnisses während der Wärmebehandlung und Abkühlung des Erzeugnisses nach dem Durchlauf der Brennwelle wird das vorgeformte Roherzeugnis in ein Pulvergemisch eingelegt, das einen chemisch inerten hochschmelzenden Werkstoff (beispielsweise BN; $Si_3N_4$ u.a. und ihre Gemische) und/oder ein Reaktionsgemisch (beispielsweise Ti, Al, Si u.a.) enthält, und die Wärmebehandlung wird durch die Initiierung eines Brennens des Roherzeugnisses oder des Reaktionsgemisches durchgeführt.

Bei der Wärmebehandlung unter einem Druck von ca. 50 bis ca. 1000 MPa wird die Abkühlgeschwindigkeit des Erzeugnisses durch die Druckreduzierung auf 7 bis 15 MPa geregelt, um eine Zerstörung des Erzeugnisses infolge der Wärmespannungen zu verhindern.

In den Fällen, wenn das vorgeformte Roherzeugnis in eine Pulverschüttung nicht eingelegt werden kann oder wenn dadurch kein positiver Effekt (beispielsweise, wenn es schwer ist, ein Pulvergemisch zusammenzustellen, das gegenüber dem darin einzulegenden Roherzeugnis neutral ist) erzielt wird, wird das Roherzeugnis vor der Wärmebehandlung mit Flammenführung mittels einer externen Wärmequelle (beispielsweise mit einen Widerstandsheizkörper) auf eine Temperatur unterhalb der kritischen Temperatur der Wärmeexplosion vorgewärmt. Diese Temperatur ist von der chemischen Zusammensetzung des Gemenges für das Roherzeugnis abhängig.

Im obengenannten Verfahren werden die Abkühlungsverhältnisse nach dem Durchlauf der Brennwelle durch eine Änderung der Temperatur der externen Wärmequelle geregelt. Die Erzeugnisabkühlung gemäß dem vorgegebenen Temperaturverlauf nach der Wärmebehandlung gestattet es die Wärmespannungen im Fertigerzeugnis zu beseitigen und seine Zerstörung zu verhindern.

Um die Endporosität des herzustellenden Erzeugnisses zu reduzieren, wird es im Warmzustand zusätzlich beispielsweise durch Pressen verdichtet.

Das Wesen des erfindungsgemäßen Verfahrens wird an Hand folgender Beispiele veranschaulicht.

Beispiel 1.

Zur Herstellung eines Verdampfungstiegels wird ein Gemenge aus pulverförmigen Komponenten: Titan Ti - 43,5 Masseprozent, Titannitrid TiN - 50 Masseprozent, Titansilizid $Ti_5Si_3$ - 4,5 Masseprozent, Aluminiumoxid $Al_2O_3$ -2 Masseprozent aufbereitet. Die genannten Komponenten werden in einer Kugelmühle vermischt. Nach dem Austragen wird das Gemenge zu einem Roherzeugnis in Form eines Tiegels mit einem Durchmesser von 30 mm und einer Höhe von 70 mm gepreßt. Das gepreßte Roherzeugnis wird in eine Graphithülse mit einem Durchmesser von 55 mm und einer Höhe von 100 mm eingebracht und mit einem Pulvergemisch aus Titan Ti - 50 Masseprozent und Titannitrid TiN - 50 Masseprozent überschüttet. Die Graphithülse wird in ein Reaktionsgefäß eingebracht, das mit Stickstoff unter einem Druck von 100 Mpa gefüllt wird. Die Wärmebehandlung wird mit Flammenführung durchgeführt. Das Brennen findet durch die lokale Initiierung mittels einer Wolframwendel auf einer Fläche von 5 bis 7 $mm^2$ statt. Die Synthese dauert 3 bis 4 s bei einer Temperatur von 2500°C. Nach dem Abkühlen wird das Erzeugnis aus dem Reaktionsgefäß herausgenommen. Es hat eine regelmäßige geometrische Form. Das hergestellte Erzeugnis weist eine Porosität von kleiner als 8 % auf.

Weitere Beispiele und Ergebnisse sind in der Tabelle zusammengefaßt.

Tabelle

| Lfd. Nr. | Zusammensetzung des Gemenges für das Roherzeugnis, Massenprozent | Zusammensetzung der Pulverschüttung, Masseprozent | Temperatur der Erhitzung des Roherzeugnisses mittels externer Wärmequelle, °C | Brenntemperatur der Roherzeugnisses, °C | Druck der stickstoffhaltigen Atmosphäre während der Wärmebehandlung, MPa |
|---|---|---|---|---|---|
| 1 | 2 | 3 | 4 | 5 | 6 |
| 1 | $Ti$-43,5<br>$TiN$-50<br>$Ti_5Si_3$-4,5<br>$Al_2O_3$-2 | $Ti$-50<br>$TiN$-50 | – | 2500 | 100 |
| 2 | $B$-70<br>$SiC$-28<br>$TiB_2$-2 | – | – | 2200 | 200 |
| 3 | $Ti$-35<br>$SiC$-55<br>$TiSi$-10 | $Si$-80<br>$BN$-20 | – | 2700 | 950 |
| 4 | $Zr$-60<br>$ZrN$-30<br>$ZrO_2$-1 | – | – | 2000 | 5 |

Fortsetzung der Tabelle

| 1 | 2 | 3 | 4 | 5 | 6 |
|---|---|---|---|---|---|
| 5 | Si-40<br>SiC-54<br>$Ti_5Si_3-4$<br>$NbSi_2-1,5$<br>MgO-0,5 | – | – | 2450 | 300 |
| 6 | Si-25<br>C-4<br>Mo-2<br>SiC-28<br>$Si_3N_4-30$<br>$MoSi_2-10$<br>$TiO_1-1$ | B-100 | – | 2150 | 240 |
| 7 | B-80<br>Nb-2<br>SiC-3<br>NbB-15 | – | – | 2300 | 150 |
| 8 | Si-30<br>C-6<br>Ni-1<br>SiC-6<br>$MoSi_2-3$ | – | 2000 | 2500 | 350 |
| 9 | Al-30<br>AlN-60<br>$Al_2O_3-1$ | Al-40<br>AlN-60 | – | 2300 | 110 |
| 10 | B-79<br>Mn-0,5<br>$TiB_2-20$<br>TiB-0,5 | – | – | 2600 | 210 |

Fortsetzung der Tabelle

| 1 | 2 | 3 | 4 | 5 | 6 |
|---|---|---|---|---|---|
| 11 | B-84<br>BN-10<br>$MoB_2$-6 | – | – | 2200 | 150 |
| 12 | B-95<br>BN-5 | – | – | 2400 | 160 |
| 13 | Ti-40<br>B-15<br>TiN-44<br>BN-1 | – | 1800 | 2250 | 200 |
| 14 | Al-50<br>AlN-48<br>$Al_2O_3$-1<br>$SiO_2$-0,5<br>$Y_2O_3$-0,5 | – | 1600 | 2100 | 20 |
| 15 | Si-34<br>$Si_3N_4$-60<br>$TiSi_2$-1<br>$Al_2O_3$-5 | – | – | 2200 | 240 |
| 16 | Ti-6<br>TiN-5<br>$TiB_2$-44<br>SiC-45 | – | 1900 | 2250 | 300 |
| 17 | Si-20<br>Ni-60<br>TiC-20 | Si-40<br>$Si_3N_4$-60 | – | 2150 | 280 |
| 18 | Ti-44<br>Ni-6<br>TiN-50 | – | 1000 | 2500 | 40 |

Fortsetzung der Tabelle

| 1 | 2 | 3 | 4 | 5 | 6 |
|---|---|---|---|---|---|
| 19 | Si-7<br>TiN-2<br>$Si_3N_4$-1<br>$TiSi_2$-33<br>SiC-57 | B-40<br>Si-10<br>BN-50 | - | 2400 | 300 |
| 20 | B-70<br>BN-1<br>$TiB_2$-29 | - | - | 2300 | 180 |
| 21 | Al-10<br>Si-15<br>AlN-12<br>$Si_3N_4$-13<br>$Al_2O_3$-50 | Si-30<br>Al-10<br>B-60 | - | 2350 | 50 |
| 22 | Si-35<br>Ti-2,5<br>$Si_3N_4$-60<br>MgO-1<br>$Y_2O_3$-1,5 | - | 1300 | 2250 | 80 |
| 23 | Ti-75<br>B-17<br>SiC-7<br>$TiB_2$-1 | Ti-71<br>B-29 | - | 2700 | 0,1 |
| 24 | Zr-10<br>$NbSi_2$-14<br>TiSi-7<br>SiC-69 | B-77<br>Si-23 | - | 2400 | 350 |
| 25 | B-65<br>BN-35 | - | - | 2200 | 120 |

Fortsetzung der Tabelle

| 1 | 2 | 3 | 4 | 5 | 6 |
|---|---|---|---|---|---|
| 26 | Ta-3<br>$Ti_5Si_3$-5<br>$TiSi_2$-30<br>SiC-62 | B-40<br>BN-60 | - | 2450 | 290 |
| 27 | B-44<br>Ti-26<br>BN-3<br>TiN-2<br>$TaB_2$-25 | - | - | 2400 | 130 |

Fortsetzung der Tabelle

| Lfd. Nr. | Temperatur der externen Wärmequelle nach dem Durchlauf der Brennwelle, °C | Druck nach der Wärmebehandlung, MPa | Art der mechanischen Einwirkung | Dauer der Wärmebehandlung, s | Erzeugnisporosität, % |
|---|---|---|---|---|---|
| 1 | 7 | 8 | 9 | 10 | 11 |
| 1 | – | 100 | – | 3 bis 4 | < 8 |
| 2 | – | 200 | – | 360 | < 5 |
| 3 | – | 9 | – | 60 | < 15 |
| 4 | – | 5 | – | 40 bis 50 | ∼ 20 |
| 5 | – | 15 | – | 420 | < 10 |
| 6 | – | 7 | – | 400 | < 3 |
| 7 | – | 150 | – | 160 bis 180 | < 7 |
| 8 | 1000→500 (5 Grad/s) | 350 | – | 600 | < 10 |
| 9 | – | 110 | – | 180 | < 15 |
| 10 | – | 210 | – | 360 bis 400 | < 5 |
| 11 | – | 150 | – | 360 | < 5 |
| 12 | – | 160 | – | 350 bis 360 | < 8 |
| 13 | – | 200 | – | 5 bis 10 | < 8 |
| 14 | – | 20 | Pressen P=300 kp/cm$^2$ | 200 | < 0,5 |
| 15 | – | 10 | – | 400 | < 5 |
| 16 | 1000 | 300 | – | 450 bis 480 | < 3 |
| 17 | – | 8 | – | 360 | < 3 |
| 18 | – | 40 | Pressen P=330 kp/cm$^2$ | 5 bis 10 | < 1 |
| 19 | – | 15 | – | 420 | < 15 |
| 20 | 800 | 180 | – | 240 bis 260 | < 7 |
| 21 | – | 10 | – | 200 | 6 |
| 22 | – | 14 | – | 300 bis 360 | 10 |
| 23 | 1000 | 0,1 | Pressen P=260 kp/cm$^2$ | 4 bis 8 | 3 |
| 24 | 900→100 (10 Grad/s) | 10 | – | 400 bis 440 | 10 |

Fortsetzung der Tabelle

| 1 | 7 | 8 | 9 | 10 | 11 |
|---|---|---|---|---|---|
| 25 | - | 120 | - | 300 bis 400 | ∠ 17 |
| 26 | - | 11 | - | 420 | ∠ 5 |
| 27 | 700 | 130 | - | 300 bis 400 | ∠ 7 |

In allen obenangeführten Beispielen wird eine gleichmäßige Nitrierung der Roherzeugnisse auf dem Querschnitt gewährleistet sowie ein Bersten und eine Zerstörung infolge der Wärmespannungen vermieden.

Das erfindungsgemäße Verfahren zur Herstellung keramischer Erzeugnisse aus Werkstoffen auf der Basis hochschmelzender Nitride weist im Vergleich zu üblichen Verfahren folgende Vorteile auf:
- eine Intensivierung des Sinterungsvorganges durch die Wärmebehandlung bei Hochtemperaturen;
- die Möglichkeit, einen Werkstoff mit einer homogenen Zusammensetzung (im Falle von großen Roherzeugnissen) zu gewinnen, weil der Nitrierungsvorgang unter Verhältnissen der Verbreitung einer flachen Brennwelle abläuft;
- eine kurze Dauer des Vorgangs und die damit verbundenen hohen Temperaturgradienten (bis zu $10^3$ Grad/s auf der Durchwärmungsstufe) zusammen mit den bereits erwähnten Hochtemperaturen gestatten es, Erzeugnisse mit einer niedrigen Endporosität herzustellen.

Das erfindungsgemäße Verfahren gestattet es, auf die komplizierte Hochtemperaturausrüstung vollständig zu verzichten, die Produktionsflächen zu reduzieren, den Elektroenergieverbrauch herabzusetzen und die Herstellung keramischer Werkstoffe zu vereinfachen, weil die Synthese und das Formen der Werkstoffe und der Erzeugnisse in einer Stufe durchgeführt werden. Durch die Durchführung des Prozesses mit Flammenführung wird eine hohe Leistung bei der Herstellung der Erzeugnisse aus den hochschmelzende Nitride enthaltenden Werkstoffen infolge einer kurzzeitigdauernden Synthese erzielt.

Industrimäßige Verwertbarkeit

Besonders vorteilhaft kann die Erfindung zur Herstellung von Tiegeln zum Schmelzen und Verdampfen von Metallen bei der Vakuummetallisierung in der elektrochemischen Industrie, bei der Herstellung von Elektroden für die Elektrolyse aggressiver Medien, bei der Herstellung von Werkstoffen zum Auskleiden von Hochtemperaturöfen, bei der Herstellung von im Vakuum betriebenen hitzebeständigen dielektrischen Erzeugnissen eingesetzt werden.

Die Erfindung kann zur Herstellung der Verkleidung für magnetohydrodynamische Generatoren, zur Herstellung von unter extremen Bedingungen betriebenen Werkstücken wie Teile von adiabatischen Gasturbinen- und Dieselmotoren Verwendung finden.

Die Erfindung kann außerdem bei der Herstellung von Schneid und Schleifwerkzeug zum Einsatz kommen.

**Patentansprüche**

**1.** Verfahren zur Herstellung keramischer Erzeugnisse auf der Basis hochschmelzender Nitride, welches die Aufbereitung eines pulverförmigen Gemenges, das mindestens eine Komponente enthält, die aus einer Gruppe ausgewählt wird, die aus den Metallen der III. bis VIII. Gruppe des Periodischen Systems der Elemente, Bor, Silizium, und Kohlenstoff besteht, das Formen eines Roherzeugnisses und dem Gemenge und seine Wärmebehandlung mit Flammenführung in der Atmosphäre eines stickstoffhaltigen Gases unter Druck einschließt, dadurch **gekennzeichnet**, daß ins Gemenge mindestens eine Verbindung aus der Reihe der Boride und Silizide der Übergangsmetalle der IVa. bis VIa. Gruppe des Periodischen Systems der Elemente und/oder der Werkstoff des herzustellenden Erzeugnisses eingeführt und die Wärmebehandlung unter der Temperaturregelung während der Behandlung von ca. 2000 bis ca. 3000°C und bei einem Druck des stickstoffhaltigen Gases von ca. 0,1 bis ca. 1000 MPa durchgeführt wird.

**2.** Verfahren nach Anspruch 1, dadurch **gekennzeichnet**, daß ins Ausgangsgemenge für das Roherzeugnis ein Gemisch zusätzlich eingeführt wird, das Siliziumkarbid und Borid und/oder Silizid eines Metalls der IVa. bis VIa. Gruppe des Periodischen Systems der Elemente enthält, wobei der Siliziumkarbidgehalt im Gemisch von ca. 20 bis ca. 95 Masseprozent beträgt.

**3.** Verfahren nach Ansprüchen 1, 2, dadurch **gekennzeichnet**, daß ins Ausgangsgemenge für das Roherzeugnis mindestens eine Komponente aus der Reihe der Oxide der Elemente der II. bis IV. Gruppe des Periodischen Systems der Elemente bei einem Gesamtoxidgehalt von ca. 0,5 bis 50 Masseprozent zusätzlich eingeführt wird.

**4.** Verfahren nach Ansprüchen 1, 2, 3, dadurch **gekennzeichnet**, daß das vorgeformte Roherzeugnis vor der Wärmebehandlung in ein Pulvergemisch, das einen chemisch inerten hochschmelzenden Werkstoff enthält, und/oder in ein Reaktionsgemisch eingelegt und die Wärmebehandlung durch die Initiierung eines Brennens des Roherzeugnisses oder des Reaktionsgemisches durchgeführt wird.

**5.** Verfahren nach Ansprüchen 1, 2, 3, 4, dadurch **gekennzeichnet**, daß bei der Wärmebehandlung unter einem Druck von ca. 50 bis ca. 1000 MPa die Abkühlgeschwindigkeit des Erzeugnisses durch die Druckreduzierung auf ca. 7 bis 15 MPa geregelt wird.

**6.** Verfahren nach Ansprüchen 1, 2, 3, dadurch **gekennzeichnet**, daß bei der Wärmebehandlung mit Flammenführung das vorgeformte Roherzeugnis mittels einer externen Wärmequelle auf eine Temperatur unterhalb der kritischen Temperatur der Wärmeexplosion des Gemenges für das Roherzeugnis vorgewärmt und die Abkühlung nach dem Durchlauf der Brennwelle durch eine Änderung der Temperatur der externen Wärmequelle geregelt wird.

**7.** Verfahren nach Ansprüchen 1, 6, dadurch **gekennzeichnet**, daß das hergestellte Erzeugnis im Warmzustand vorzugsweise durch Pressen zusätzlich verdichtet wird.

# INTERNATIONAL SEARCH REPORT

International Application No PCT/SU 89/00074

## I. CLASSIFICATION OF SUBJECT MATTER (if several classification symbols apply, indicate all) [6]

According to International Patent Classification (IPC) or to both National Classification and IPC

Int. Cl.[5] C 04 B 35/58

## II. FIELDS SEARCHED

| Minimum Documentation Searched [7] | |
|---|---|
| Classification System | Classification Symbols [8] |
| Int. Cl.[4] | C04B 35/58, 35/65, C22C 29/00 |

| Documentation Searched other than Minimum Documentation to the Extent that such Documents are Included in the Fields Searched [8] |
|---|
| |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 1073229 (I.P. Borovinskaya et al.) 15 February 1984 (15.02.84), see the claims, the example | 1,4 |
| A | DE, B2, 2628578 (INSTITUT CHIMITSCHESKOI FIZIKI AKADEMII NAUK SSSR), 6 March 1980 (06.03.80), see the claims | 1,3,4 |
| A | US, A, 3726643 (FILIAL INSTITUTA KHIMICHESKOI FIZIKI AKADEMII NAUK USSR), 10 April 1973 (10.04.73) | 1,4 |
| A | EP, A2, 0165707 (SUMITOMO ELECTRIC INDUSTRIES LIMITED), 27 December 1985 (27.12.85), see the claims | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 10 October 1989 (10.10.89) | 6 December 1989 (06.12.89) |
| International Searching Authority | Signature of Authorized Officer |
| ISA/SU | |

Form PCT/ISA/210 (second sheet) (January 1985)